(19) Europäisches Patentamt
European Patent Office
Office européen des brevets

(11) EP 0 461 268 B1

(12) EUROPEAN PATENT SPECIFICATION

(45) Date of publication and mention of the grant of the patent: **27.05.1998 Bulletin 1998/22**

(21) Application number: **91901549.5**

(22) Date of filing: **26.12.1990**

(51) Int Cl.[6]: **C08F 10/00**, C08F 4/654

(86) International application number: **PCT/JP90/01709**

(87) International publication number: **WO 91/09887 (11.07.1991 Gazette 1991/15)**

(54) **PROCESS FOR PRODUCING OLEFIN POLYMERIZATION CATALYST AND POLYOLEFIN**

VERFAHREN ZUR HERSTELLUNG EINES KATALYSATORS ZUR OLEFINPOLYMERISATION UND VON POLYOLEFIN

PROCEDE DE PRODUCTION D'UN CATALYSEUR DE POLYMERISATION DES OLEFINES, ET POLYOLEFINE

(84) Designated Contracting States: **BE CH DE ES FR GB IT LI NL SE**

(30) Priority: **28.12.1989 JP 343340/89**

(43) Date of publication of application: **18.12.1991 Bulletin 1991/51**

(73) Proprietor: **IDEMITSU PETROCHEMICAL CO., LTD.**
**Minato-ku, Tokyo 108 (JP)**

(72) Inventors:
- **FUNABASHI, Hideo Idemitsu Ichihara-shi Chiba-ken 299-01299-01 (JP)**
- **SUGAHARA, Akinobu Idemitsu Ichihara-shi Chiba-ken 299-01 (JP)**
- **TANAKA, Akira Idemitsu Ichihara-shi Chiba-ken 299-01 (JP)**
- **TODA, Masatoshi Idemitsu Ichihara-shi Chiba-ken 299-01 (JP)**
- **OTA, Tsuyoshi Idemitsu Ichihara-shi Chiba-ken 299-01 (JP)**

(74) Representative: **Hoeger, Stellrecht & Partner**
**Uhlandstrasse 14 c**
**70182 Stuttgart (DE)**

(56) References cited:
**EP-A- 0 297 076**
**EP-A- 0 319 913**
**EP-A- 0 322 798**
**EP-A- 0 395 083**
**GB-A- 2 183 244**
**JP-A-56 155 205**
**JP-A-57 205 406**

- **DATABASE WPI, ACCESSION NO. 83-37891K [16], DERWENT PUBLICATION LTD, LONDON, GB; & JP-A-58 041 832 (IDEMITSU KOSAN K.K.) 11-03-1983**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 461 268 B1

## Description

### TECHNICAL FIELD

The present invention relates to a solid catalyst composition for olefin polymerization and also to a process for producing polyolefins.

### BACKGROUND ART

The polymerization of olefins is accomplished by the aid of a catalyst generically called Ziegler-type catalyst. In general, it consists of two components. One component is a transition metal compound and the second component is an organometallic compound. The transition metal compound is conventionally prepared by the use of a solid carrier such as magnesium chloride and magnesium dialkoxide. There has been a variety of related technologies.

The article of Lee I. Smith and Paul F. Wiley published in J. Am. Chem. Soc. 1946, vol. 68, pages 887-893 describes the production of a solid product by reacting metallic magnesium with dry methanol saturated with iodine whereby large granular crystals of magnesium methoxide were obtained.

The magnesium compound to be used as a solid carrier of the catalyst for olefin polymerization should have an optimum particle diameter so that the catalyst has an improved activity and the resulting polymer has a controlled particle diameter. To this end, the solid carrier is prepared by grounding a magnesium compound alone or in combination with an ester. The preparation of the solid carrier involves mechanical grinding as an essential procedure. Without this grinding procedure, the solid carrier does not contribute to the improved polymerization activity. Moreover, the solid carrier supports such a small amount of transition metal (e.g., titanium) that the catalyst is poor in productivity per unit weight. Low productivity gives rise to a large amount of residual chlorine in the polymer and poses a problem associated with the particle shape and particle size distribution of the polymer. (Inadequate polymer particles cause troubles in polymer processing such as transfer line clogging with fine polymer powder.) Therefore, the grinding procedure is recognized as very important, and a great deal of works and expenses have been spent to establish the best conditions for grinding system (wet or dry), grinding machine, grinding intensity, and grinding time.

On the other hand, there have been proposed several methods for the improvement of the polymer morphology (particle diameter and shape). According to one method, magnesium is supported on an inorganic oxide such as silica. (See Japanese Patent Laid-open Nos. 291604/1986, 291105/1986, 119203/1987, and 119204/1987.) According to the other method, a magnesium compound is dissolved in an alcohol or the like and then caused to separate out before being used as a carrier. (See Japanese Patent Laid-open No. 811/1981.) These methods obviate the grinding process but need the complicate steps for supporting, dissolution, and separation, which have an adverse effect on the stable performance of the catalyst.

In view of the foregoing, the present inventors carried out a series of researches, which led to the finding that a reaction product of metallic magnesium or a magnesium compound represented by RMgR' (where R and R' are the same or different alkyl groups), an alcohol, and a specific amount of halogen has such a narrow particle size distribution that it can be used as such (without particle size adjustment by grinding) as a carrier of the catalyst for olefin polymerization. This carrier is comparable to or superior to conventional ones in ability to support titanium, polymerization activity, and stereoregularity. In addition, not only does it give rise to a polymer having greatly improved morphology, but it also permits the control of polymer morphology if proper conditions are established for the reaction of metallic magnesium or a magnesium compound represented by RMgR' (where R and R' are the same or different alkyl groups), alcohol, and halogen.

According to EP-A 319 913 a solid catalyst component for polyolefin polymerization may be obtained by reacting in a first step a dialkoxy magnesium, an aromatic dicarboxylic acid ester and a silicon compound and in a further step such reaction product with a titanium tetrahalide, an organic aluminium compound and an electron donative compound. However, this reference does not comprise any disclosure as to the selection or preparation of the dialkoxymagnesium which is critical for the present invention.

The carrier in the present invention is entirely different from any known magnesium-based carrier. It is a reaction product of metallic magnesium or a magnesium compound represented by RMgR' (where R and R' are the same or different alkyl groups), an alcohol, and a specific amount of halogen. There is a known process in which a small amount of iodine (or ethyl orthoformate) is added to the reaction of metallic magnesium with an alcohol. (See Japanese Patent Publication No. 7093/1971 and U.S. Patent No. 4,412,132.) In this process, however, iodine is used in a very small amount merely as a reaction initiator. By contrast, in the process according to the present invention, halogen is used in a much greater amount than is used as an initiator. This indicates that the reaction product in the present invention is entirely different from that disclosed in the prior art.

Accordingly, it is an object of the present invention to provide a new carrier of the catalyst for olefin polym erization, and also to provide a solid catalyst component based on it and a process for producing polyolefins.

## DISCLOSURE OF THE INVENTION

The present invention is embodied in a solid catalyst composition to be used for olefin polymerization, obtained from a solid product (a), which is obtained by the reaction of metallic magnesium or a magnesium compound represented by RMgR' (where R and R' are the same or different alkyl groups), an alcohol, and a halogen in an amount more than 0.0001 gram-atom and less than 0.06 gram-atom for 1 mol of the metallic magnesium and characterized by a specific morphology.

The present invention is also embodied in a solid catalyst composition which is composed of (a) a solid product obtained by the reaction of metallic magnesium, an alcohol, and a halogen in an amount more than 0.0001 gram-atom and less than 0.06 gram-atom for 1 mol of the metallic magnesium, (b) a titanium compound, and (c) an optional electron donor compound.

The present invention is also embodied in a process for producing polyolefins which comprises using (A) a solid catalyst component, (B) an organometallic compound, and (C) an optional electron donor compound, said solid catalyst component being composed of (a) a solid product obtained by the reaction of metallic magnesium or a magnesium compound represented by RMgR' (where R and R' are the same or different alkyl groups), an alcohol, and a halogen in an amount more than 0.0001 gram-atom and less than 0.06 gram-atom for 1 mol of the metallic magnesium, (b) a titanium compound, and (c) an optional electron donor compound.

According to the present invention, the above-mentioned solid product (a) has a sphericity (S) smaller than 1.60 as defined by the formula (1) below and a particle size distribution index (P) smaller than 5.0 as defined by the formula (2) below.

$$S = (E_1/E_2)^2 \qquad (1)$$

(where $E_1$ denotes the projected perimeter of a particle, and $E_2$ denotes the perimeter of the circle of equal projected area of a particle.)

$$P = D_{90}/D_{10} \qquad (2)$$

(where $D_{90}$ denotes the particle diameter corresponding to a cumulative weight fraction of 90%, and $D_{10}$ denotes the particle diameter corresponding to a cumulative weight fraction of 10%.)

The solid product having the specific sphericity and particle size distribution index as defined above will be useful as a catalyst carrier so long as it is one which is obtained by the reaction of at least metallic magnesium and an alcohol.

In addition, the solid product should preferably be one which gives an X-ray diffraction spectrum (by Cu K$\alpha$ line) in which three intense peaks appear within the scattering angle of 5-20°, with the ratio of the peak intensity b/c being greater than 0.4, where peaks are designated as a, b, and c starting from the low scattering angle side.

The process for polyolefin production as mentioned above gives rise to a polyolefin powder having a sphericity (S) greater than 1.6 (as defined by the formula (1) above) and a particle size distribution index (P) greater than 5.0 (as defined in the formula (2) above).

## BRIEF DESCRIPTION OF DRAWINGS

Fig. 1 is a flowchart showing an example of the process in the present invention.

## BEST MODE FOR CARRYING OUT THE INVENTION

The invention will be described in more detail in the following.

The solid product (a) used in the present invention is obtained from metallic magnesium, an alcohol, and a halogen.

The metallic magnesium may be in any form, such as granule, ribbon, and powder. Also, the metallic magnesium should preferably be free of magnesium oxide film covering it, although no specific restrictions are placed on its surface state.

The alcohol is not specifically limited; but it should preferably be a lower alcohol having 1-6 carbon atoms. Ethanol is most desirable, because it gives a solid product which greatly improves the catalyst performance. The alcohol may have any purity and water content which are not specifically limited. It is desirable, however, that the water content should be lower than 1%, preferably lower than 2000 ppm, because excess water in the alcohol forms magnesium hydroxide [$Mg(OH)_2$] on the surface of metallic magnesium. Moreover, the water content should preferably be as low

as possible, usually lower than 200 ppm, so that the resulting solid product (a) has a good morphology.

The halogen is not specifically restricted in its kind. Chlorine, bromine, and iodine can be used, with iodine being preferable. The halogen may be used in any form and state. For example, it may be used in the form of solution in an alcohol (e.g., ethanol).

The amount of the alcohol is not specifically limited; however, it usually ranges from 2 to 100 mol, preferably from 5 to 50 mol, for 1 mol of the metallic magnesium. An excess amount of alcohol lowers the yield of the solid product (a) having a good morphology. With too small an amount of alcohol, it is difficult to carry out smooth stirring in the reaction vessel. The above-mentioned molar ratio is not limitative.

The halogen should be used in an amount more than 0.0001 gram-atom, preferably more than 0.0005 gram-atom, most desirably more than 0.001 gram-atom, for 1 mol of the metallic magnesium. With an amount less than 0.0001 gram-atom, the halogen merely functions as a reaction initiator, giving rise to the solid product (a) which must undergo grinding. (Without grinding, the solid product (a) is poor in supporting capacity, catalytic activity, stereoregularity, and ability to form a polymer having a good morphology.)

The amount of the halogen has no upper limit so long as the desired solid product (a) is obtained. An adequate amount is usually less than 0.06 gram-atom. It is necessary to select an adequate amount of halogen in order to control the particle diameter of the solid product (a).

The reaction of metallic magnesium, alcohol, and halogen may be carried out by any known method involving the refluxing (at about 79°C) which lasts (for usually 20-30 hours) until the reaction system does not evolve hydrogen gas any longer. For example, a first method consists of adding iodine (in solid form) to an alcohol containing metallic magnesium and reacting them under refluxing by heating; a second method consists of adding an alcohol solution of iodine dropwise to an alcohol containing metallic magnesium and reacting them under refluxing by heating; and a third method consists of adding an alcohol solution of iodine dropwise to an alcohol containing metallic magnesium while keeping the latter hot. Regardless of the method selected, the reaction should preferably be carried out in an inert gas atmosphere (such as nitrogen and argon) and, if necessary, in the presence of an inert organic solvent (such as n-hexane and other saturated hydrocarbons). It is not necessary to place the metallic magnesium, alcohol, and halogen all at once in the reaction vessel; but it is possible to place them by portions in the reaction vessel. It is desirable to place all of the alcohol in the reaction vessel at the beginning and then to add metallic magnesium by portions several times. This procedure prevents the reaction system from evolving hydrogen gas in a large amount at one time and hence ensures safety and permits the use of a smaller reaction vessel, without the partial loss of alcohol and halogen by splashing. The number of portions should be properly determined according to the size of the reaction vessel; but it is usually 5 to 10 to avoid unnecessary complexity.

The reaction may be carried out batchwise or continuously. There is a modified method which consists of repeating the steps of adding a small portion of metallic magnesium to as much alcohol as necessary placed in a reaction vessel and removing the reaction product.

The thus obtained solid product is used for the synthesis of a solid catalyst composition after drying or after filtration and washing with an inert solvent such as heptane. In either cases, the solid product (a) can be used as such without necessity for grinding or classification for a desired particle size distribution.

The solid product (a) is almost spherical and has a sharp particle size distribution, with individual particles varying very little in sphericity. The solid product should be composed of particles which have the sphericity (S) (as defined by the formula (1) above) smaller than 1.60 and the particle size distribution index (P) (as defined by the formula (2) above) smaller than 5.0. In formula (2), $D_{90}$ denotes the particle diameter corresponding to a cumulative weight fraction of 90%. In other words, the cumulative sum of the weight of particles smaller than the particle diameter defined by $D_{90}$ accounts for 90% of the total weight of all the particles. $D_{10}$ is defined in the similar way.

The solid product suitable for use as the catalyst carrier should be one which is produced from at least an alcohol and metallic magnesium or a magnesium compound represented by RMgR' (where R and R' are the same or different alkyl groups) and which has the sphericity (S) (as defined by the formula (1) above) smaller than 1.60 and the particle size distribution index (P) (as defined by the formula (2) above) smaller than 5.0.

The titanium compound (b) used in the present invention may be selected from any titanium compounds which are represented by the formula below

$$TiX_n(OR)_{4-n}$$

(where X denotes a halogen atom, particularly a chlorine atom; R denotes a $C_{1-10}$ hydrocarbon, particularly a linear or branched alkyl group, with two or more R's being the same or different; n is an integer of 0 to 4.)

Examples of the titanium compound include $Ti(O\text{-}i\text{-}C_3H_7)_4$, $Ti(O\text{-}C_4H_9)_4$, $TiCl(O\text{-}C_2H_5)_3$, $TiCl(O\text{-}i\text{-}C_3H_7)_3$, $TiCl(O\text{-}C_4H_9)_3$, $TiCl_2(O\text{-}C_4H_9)_2$, $TiCl_2(O\text{-}i\text{-}C_3H_7)_2$, and $TiCl_4$.

According to the present invention, the solid catalyst component may contain an optional electron donor compound

(c), which is usually an organic compound containing oxygen, nitrogen, phosphorus, or sulfur. Examples of the electron donor compound include amines, amides, ketones, nitriles, phosphines, phosphoramides, esters, ethers, thioethers, alcohols, thioesters, acid anhydrides, acid halides, aldehydes, organic acids, organosilicon compounds containing Si-O-C linkages, and organosilicon compounds containing alkoxyl groups. Specific examples are listed below.

Aromatic carboxylic acids (such as benzoic acid and *p*-oxybenzoic acid); acid anhydrides (such as succinic anhydride, benzoic anhydride, and *p*-toluic anhydride); ketones having 3-15 carbon atoms (such as acetone, methyl ethyl ketone, methyl isobutyl ketone, acetophenone, benzophenone, and benzoquinone); aldehydes having 2-15 carbon atoms (such as acetaldehyde, propionaldehyde, octyl aldehyde, benzaldehyde, and naphthaldehyde); esters having 2-18 carbon atoms (such as methyl formate, ethyl formate, methyl acetate, ethyl acetate, vinyl acetate, propyl acetate, octyl acetate, cyclohexyl acetate, ethyl propionate, methyl butyrate, ethyl butyrate, ethyl valerate, methyl chloroacetate, ethyl dichloroacetate, methyl methacrylate, ethyl crotonate, ethyl pivalate, dimethyl maleate, ethyl cyclohexanecarboxylate, methyl benzoate, ethyl benzoate, propyl benzoate, butyl benzoate, methyl toluate, ethyl toluate, amyl toluate, ethyl ethylbenzoate, methyl anisate, ethyl anisate, ethyl ethoxybenzoate, ethyl *p*-butoxybenzoate, ethyl *o*-chlorobenzoate, ethyl naphthoate, γ-butyrolactone, δ-valerolactone, coumarin, phthalide, and ethylene carbonate); and mono- and diesters of aromatic dicarboxylic acids (such as monomethyl phthalate, dimethyl phthalate, monomethyl terephthalate, dimethyl terephthalate, monoethyl phthalate, diethyl phthalate, monoethyl phthalate, diethyl terephthalate, monopropyl phthalate, dipropyl phthalate, monopropyl phthalate, dipropyl terephthalate, monobutyl phthalate, dibutyl phthalate, monobutyl terephthalate, dibutyl terephthalate, monoisobutyl phthalate, diisobutyl phthalate, monoamyl phthalate, diamyl phthalate, monoisoamyl phthalate, diisoamyl phthalate, ethyl butyl phthalate, ethyl isobutyl phthalate, and ethyl propyl phthalate).

Acid halides having 2-20 carbon atoms, with the acyl group being an aliphatic mono- to trivalent acyl group having 2-20 carbon atoms or an aromatic (alkaryl or aralkyl) mono- to trivalent acyl group having 7-20 carbon atoms, and with the halogen being chlorine or bromine, preferably chlorine. Examples of acid halides that can be used in the present invention are listed below.

Acetyl chloride, acetyl bromide, propionyl chloride, butyryl chloride, isobutyryl chloride, 2-methylpropionyl chloride, valeryl chloride, isovaleryl chloride, hexanoyl chloride, methylhexanoyl chloride, 2-ethylhexanoyl chloride, octanoyl chloride, decanoyl chloride, undecanoyl chloride, hexadecanoyl chloride, octadecanoyl chloride, benzylcarbonyl chloride, dichlorohexanecarbonyl chloride, malonyl dichloride, succinyl dichloride, pentanedioyl dichloride, hexanedioyl dichloride, dichlorohexanedicarbonyl dichloride, benzoyl chloride, benzoyl bromide, methylbenzoyl chloride, phthaloyl chloride, isophthaloyl chloride, terephthaloyl chloride, and benzene-1,2,4-tricarbonyl chloride. Desirable of these acid chlorides are phthaloyl chloride, isophthaloyl chloride, and terephthaloyl chloride, especially phthaloyl chloride. They may be used alone or in combination with one another.

Ethers having 2-20 carbon atoms (such as methyl ether, ethyl ether, isopropyl ether, n-butyl ether, amyl ether, tetrahydrofuran, anisole, diphenyl ether, and ethylene glycol butyl ether); acid amides (such as acetic acid amide, benzoic acid amide, and toluic acid amide); amines (such as tributyl amine, N,N'-dimethylpiperazine, tribenzylamine, aniline, pyridine, pyrroline, and tetramethyl ethylene diamine); nitriles (such as acetonitrile, benzonitrile, and tolunitrile); tetramethyl urea; nitrobenzene; lithium butyrate; and organosilicon compound having Si-O-C linkages (such as trimethylmethoxysilane, trimethylethoxysilane, dimethyldimethoxysilane, dimethyldiethoxysilane, diphenyldimethoxysilane, methylphenyldimethoxysilane, diphenyldiethoxysilane, phenyltrimethoxysilane, γ-chloropropyltrimethoxysilane, methyltriethoxysilane, ethyltriethoxysilane, vinyltriethoxysilane, butyltriethoxysilane, phenyltriethoxysilane, γ-aminopropyltriethoxysilane, chlorotriethoxysilane, ethyltripropoxysilane, vinyltributhoxysilane, ethyl silicate, butyl silicate, trimethylphenoxysilane, methyltriallyloxysilane, vinyltris(β-methoxyethoxy)silane, vinyltriacetoxysilane, and dimethyltetraethoxydisiloxane).

Examples of the organosilicon compounds also include those which are represented by the formula below

$$R^1R^2{}_{3-n}Si(OR^3)_n$$

(where $R^1$, $R^2$, and $R^3$ denote the same or different hydrocarbon residues, and n is an integer of 2 or 3.)

$R^1$ in the above formula should preferably be a branched hydrocarbon residue such as alkyl group, cycloalkyl group, phenyl group, methyl-substituted phenyl group, and other aryl groups. $R^1$ should preferably be a group in which the carbon atom adjacent to the silicon atom (or the carbon atom at the α-position) is a secondary or tertiary one, particularly a group in which the specific carbon atom has 3 alkyl groups. Moreover, $R^1$ should have 3-20 carbon atoms, preferably 4-10 carbon atoms.

$R^2$ in the above formula should be a branched or linear aliphatic hydrocarbon group having 1-20 carbon atoms, preferably 1-10 carbon atoms. $R^3$ in the above formula should be an aliphatic hydrocarbon group, preferably a linear aliphatic hydrocarbon group having 1-4 carbon atoms.

Examples of the organosilicon compounds represented by the above-formula include those which are represented

by the following formulas.

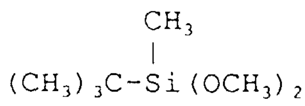

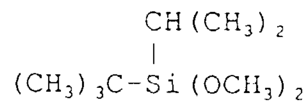

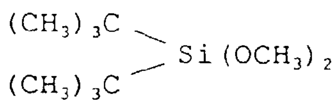

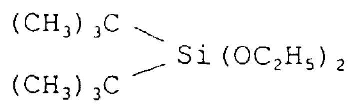

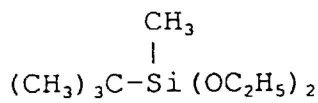

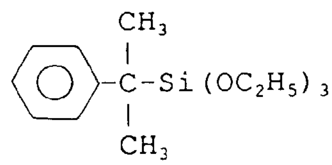

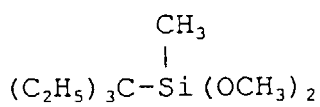

$(CH_3)_3C\text{-}Si(OC_2H_5)_3$

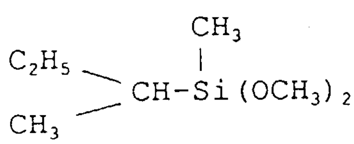

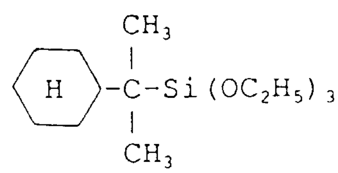

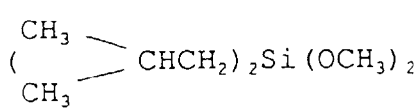

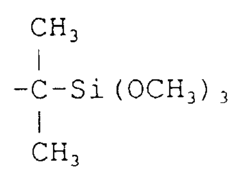

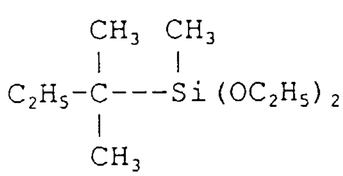

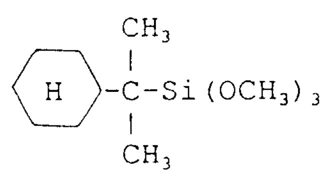

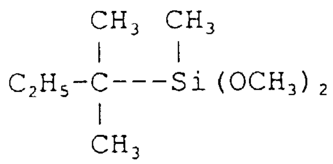

$(C_2H_5)_3C-Si(OC_2H_5)_3$

$(CH_3)_3C-Si(OCH_3)_3$

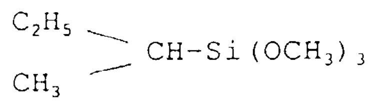

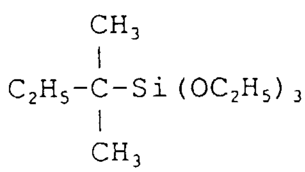

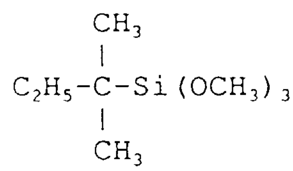

Preferable of these examples are esters, ethers, ketones, and acid anhydrides.

According to the present invention, the solid catalyst component (A) is prepared from the above-mentioned solid product (a), titanium compound (b), and optional electron donor compound (c) by any known method. A preferred method consists of bringing the solid product (a) into contact with the electron donor compound (c) and then bringing the resulting product into contact with the titanium compound (b).

There are no restrictions as to the condition under which the solid product (a) is brought into contact with the electron donor compound (c). Usually, the amount of the electron donor compound (c) is 0.01-10 mol, preferably 0.05-5 mol, for 1 mol of the solid product (a) in terms of magnesium atom. They should be kept in contact with each other for 5 minutes to 10 hours at 0-200°C, preferably for 30 minutes to 3 hours at 30-150°C. The reaction may be carried out in an inert hydrocarbon solvent such as pentane, hexane, heptane, and octane.

There are no restrictions as to the condition under which the solid product (a) is brought into contact with the titanium compound (b), or the contact product of the solid product (a) and the electron donor compound (c) is brought into contact with titanium compound (b). Usually, the amount of the titanium compound (b) is 1-50 mol, preferably 2-20 mol, for 1 mol of magnesium in the solid product (a). The reactants should be kept in contact with one another for 5 minutes to 10 hours at 0-200°C, preferably for 30 minutes to 5 hours at 30-150°C.

For the contact reaction, the titanium compound (b) may be used alone as such if it is a liquid (like titanium tetrachloride); otherwise, it may be used in the form solution in an inert hydrocarbon solvent (such as hexane, heptane, and kerosene). Prior to the above-mentioned contact reaction, the solid product (a) may be treated with any one of halogenated hydrocarbons, halogen-containing silicon compounds, halogen gases, hydrogen chloride, or hydrogen iodide.

After the contact reaction, the reaction product should preferably be washed with an inert hydrocarbon (such as *n*-hexane and *n*-heptane).

The catalyst component should preferably have a pore volume greater than 0.4 cc/g and a specific surface area greater than 300 $m^2/g$; otherwise it might be poor in catalytic activity. Incidentally, the pore volume and specific surface area can be obtained according to the BET method which depends on measuring the volume of nitrogen gas adsorbed by the sample. (See J. Am. Chem. Soc. vol. 60, p. 309, 1983.)

The process of the present invention employs the organometallic compound (B) which is an organic compound containing a metal belonging to Groups I to III of the Periodic Table. This metal includes, for example, lithium, sodium, potassium, zinc, cadmium, and aluminum, of which aluminum is preferable. Examples of the organometallic compound (B) include alkyl lithium (such as methyl lithium, ethyl lithium, propyl lithium, and butyl lithium) and dialkyl zinc (such as dimethyl zinc, diethyl zinc, dipropyl zinc, and dibutyl zinc).

The organoaluminum compound that can be used in the present invention is one which is represented by the formula below

$$AlR^4{}_mX^2{}_{3-m}$$

(where $R^4$ denotes an alkyl group, cycloalkyl group, or aryl group having 1-10 carbon atoms; and $X^2$ denotes a halogen atom (such as chlorine or bromine); and m is an integer of 1 to 3.)

Examples of the organoaluminum compound include trialkylaluminum (such as trimethylaluminum, triethylaluminum, triisopropylaluminum, triisobutylaluminum, and trioctylaluminum) and dialkylaluminum monohalide (such as diethylaluminum monochloride, dipropylaluminum monochloride, and dioctylaluminum monochloride).

According to the process of the present invention, an electron donor compound (C) may be used, if necessary. It may be the same as or different from the electron donor compound (c) used in the preparation of the above-mentioned solid catalyst component (A).

The process of the present invention is designed for the polymerization of olefins represented by the formula below

$$R^3\text{-}CH{=}CH_2$$

(where $R^3$ denotes a hydrogen atom or a $C_{1\text{-}20}$ alkyl group or cycloalkyl group.)

Examples of the olefins include straight-chain monoolefins (such as ethylene, propylene, butene-1, and hexene-1); branched-chain monoolefins (such as 4-methylpentene-1); and dienes (such as butadiene).

The process of the present invention may be effectively used for the homopolymerization and copolymerization of the above-mentioned olefins.

According to the process of the present invention, the polymerization may be carried out under the same condition as used for the known process. In other words, the polymerization may be performed at an olefin partial pressure higher than the atmospheric pressure, at a temperature of from -80°C to +150°C, in the gas phase or liquid phase, and, if necessary, in the presence of an inert hydrocarbon diluent. The polymerization carried out under such conditions gives rise to a polyolefin powder having an almost complete sphericity and a sharp particle size distribution. In other words, the polyolefin powder has the sphericity (S) smaller than 1.60 and the particle size distribution index (P) smaller than 5.0, as mentioned above.

The polymerization process of the present invention is characterized by the use of a Ziegler-type catalyst in which the catalyst carrier is the above-mentioned solid product (a) formed by the reaction of metallic magnesium, an alcohol, and a specific amount of halogen. The solid product (a) is used in combination with the titanium compound (b), the organometallic compound (B), the solid catalyst component (A), and other optional components (such as electron donor compound), which are prepared by any known methods. In addition, the catalyst thus formed is used for the polymerization of olefins under the same conditions as before, such as those disclosed in Japanese Patent Publication No. 34098/1971 and Japanese Patent Laid-open Nos. 98076/1977, 2580/1978, 43094/1978, 181807/1986, 127305/1987, 63207/1985, and 139706/1985.

The invention will be described in more detail with reference to the following examples, which are not intended to restrict the scope of the invention.

Among reagents used in the examples are ethanol (made by Wako Junyaku Co., Ltd.), reagent grade, iodine (made by Wako Junyaku Co., Ltd.), reagent grade, and metallic magnesium, in granular form (350 μm in average particle size).

Measurements of X-ray diffraction were carried out in the following manner.

The solid product was ground into powder having an average particle diameter of 10 μm, which was subsequently vacuum-dried at normal temperature. The dry powder was filled in a cell of Mylar film under an inert gas atmosphere. The Mylar film is 6 μm thick and the cell is 1 mm thick (including the thicknesses of the Mylar film and dry powder). The cell was attached to the powder X-ray diffraction apparatus (made by Rigaku Denki Kogyo Co., Ltd.) for measurement of X-ray diffraction spectrum by the transmission method. X-rays having a wavelength ($\lambda$ k$\alpha$) of 1.543 Å were generated by using a copper anticathode at a voltage of 50 kV and a current of 120 mA.

**Example 1**

(1) Preparation of the solid product (a)

In a 6-liter glass reactor equipped with a stirrer, in which the air had been thoroughly replaced by nitrogen, were placed about 2430 g of ethanol, 16 g of iodine, and 160 g of metallic magnesium. Reaction was carried out by heating with stirring under refluxing until no hydrogen was evolved any longer. The resulting solution was dried under reduced pressure. Thus there was obtained the solid product (a).

The solid product (a) was analyzed by X-ray diffractometry with Cu K$\alpha$line. Three diffraction peaks appeared within the range of $2\theta = 5{\sim}20°$ . The ratio of the peak intensity b/c was 0.75, where peaks are designated as a, b, and c starting from the low scattering angle side.

(2) Preparation of the solid catalyst component (A)

In a 500-ml three-mouth glass flask, in which the air had been thoroughly replaced by nitrogen, were placed 16 g of the above-mentioned solid product (a) (not ground), 80 ml of purified heptane, 2.4 ml of silicon tetrachloride, and 2.3 ml of diethyl phthalate. With the reaction system kept at 90°C, 77 ml of titanium tetrachloride was added with stirring. Reaction was carried out at 110°C for 2 hours. The solid component was separated and then washed thoroughly with purified heptane. Thus there was obtained the solid catalyst component (A), which had a specific surface area of 413 $m^2/g$ and a pore volume of 0.56 cc/g.

(3) Polymerization

In a 1-liter stainless steal autoclave were placed 400 ml of purified heptane, 1 mmol of triethylaluminum, 0.25 mmol of diphenyldimethoxysilane, and 0.005 mmol of the solid catalyst component (A) in terms of titanium atom. The autoclave was charged with hydrogen until the pressure reached 0.5 $kg/cm^2$. Polymerization of propylene was carried out at 70°C for 2 hours under a total pressure of 8 $kg/cm^2$. The results are shown in Table 1.

In Table 1, the term stereoregularity is defined by the amount of insoluble matter remaining after extraction with boiling heptane for 6 hours.

The sphericity (S) was measured in the following manner.

(1) Sphericity of the solid product (a)

A dry sample of the solid product (a) was photographed with a magnification of ×150 using a scanning electron microscope (Model JSM-25S III, made by Nippon Denshi Co., Ltd.) at an accelerating voltage of 5 kV. The resulting negative underwent image processing by the transmission method using an image processing apparatus (made by Nexus Co., Ltd.). Particles smaller than 20 pixels (each pixel measuring 1.389 μm square) were disregarded, and the remaining particles (about 2000 pieces) were examined. The sphericity was calculated according to the formula (1) above from $E_1$ (the projected perimeter of a particle) and $E_2$ (the perimeter of the circle of equal projected area of a particle).

(2) Sphericity of the polyolefin powder

A sample of the polyolefin powder was photographed and the photograph underwent image processing by the direct reflectance method in the same manner as for the solid product (a), except that the size of one pixel was 0.0813 mm square. The sphericity was calculated according to the formula (1) above.

The particle size distribution index (P) was calculated according to the formula (2) above. The 90% particle diameter ($D_{90}$) and 10% particle diameter ($D_{10}$) were obtained from the particle size distribution plotted on a logarithmic distribution paper.

These procedures were repeated in the following examples and comparative examples.

**Example 2**

The procedure (1) in Example 1 was repeated to prepare the solid product (a) from about 2430 g of ethanol, 1.6 g of iodine, and 160 g of metallic magnesium. The procedures (2) and (3) in Example 1 were repeated to prepare the solid catalyst component (A) from the solid product (a) and to carry out polymerization. The results are shown in Table 1.

**Example 3**

The procedure (1) in Example 1 was repeated to prepare the solid product (a) from about 2430 g of ethanol, 32 g of iodine, and 160 g of metallic magnesium. The procedures (2) and (3) in Example 1 were repeated to prepare the solid catalyst component (A) from the solid product (a) and to carry out polymerization. The results are shown in Table 1.

**Example 4**

The procedure (1) in Example 1 was repeated to prepare the solid product (a). Then the procedure (2) in Example 1 was repeated to prepare the solid catalyst component (A) from the solid product (a), except that diethyl phthalate was replaced by dimethyl phthalate (1.9 ml). Polymerization was carried out in the same manner as the procedure (3) in Example 1. The results are shown in Table 1.

**Example 5**

The procedures in Example 1 were repeated, except that triethylaluminum as the organometallic compound (B) was replaced by triisobutylaluminum (1 mmol). The results are shown in Table 1.

**Example 6**

(1) Preparation of the solid product (a)

The same procedure as in Example 3 was repeated to prepare the solid product (a).

(2) Preparation of the solid catalyst component (A)

In a 500-ml three-mouth glass flask, in which the air had been thoroughly replaced by nitrogen, were placed 16 g of the above-mentioned solid product (a) (not ground), 60 ml of purified heptane, 2.5 ml of silicon tetrachloride, and 2.4 ml of diethyl phthalate. With the reaction system kept at 90°C, 308 ml of titanium tetrachloride was added with stirring. Reaction was carried out at 110°C for 2 hours. The solid component was separated and then washed thoroughly with purified heptane. Thus there was obtained the solid catalyst component (A).

(3) Polymerization

The procedure (3) in Example 1 was repeated to carry out polymerization. The results are shown in Table 1.

**Example 7**

(1) Preparation of the solid product (a)

In a 6-liter glass reactor equipped with a stirrer, in which the air had been thoroughly replaced by nitrogen, were placed about 2430 g of ethanol, 16 g of iodine, and 160 g of metallic magnesium. Reaction was carried out by heating with stirring under refluxing until no hydrogen was evolved any longer. The solid reaction product was filtered off from the liquid, followed by washing five times with 500 ml of heptane. The thus obtained solid product (a) was made into a heptane slurry without drying.

(2) Preparation of the solid catalyst component (A)

The same procedure as in Example 1 was repeated.

(3) Polymerization

The same procedure as in Example 1 was repeated.

**Example 8**

The procedure (1) in Example 7 was repeated to prepare the solid product (a) from about 2430 g of ethanol, 1.6 g of iodine, and 160 g of metallic magnesium. The procedures (2) and (3) in Example 7 were repeated to prepare the solid catalyst component (A) from the solid product (a) and to carry out polymerization. The results are shown in Table 1.

**Example 9**

The procedure (1) in Example 7 was repeated to prepare the solid product (a) from about 2430 g of ethanol, 32 g of iodine, and 160 g of metallic magnesium. The procedures (2) and (3) in Example 7 were repeated to prepare the solid catalyst component (A) from the solid product (a) and to carry out polymerization. The results are shown in Table 1.

**Example 10**

(1) Preparation of the solid product (a)

In a 6-liter glass reactor equipped with a stirrer, in which the air had been thoroughly replaced by nitrogen, were

placed about 2430 g of ethanol, 16 g of iodine, and 160 g of metallic magnesium. Reaction was carried out by heating with stirring under refluxing until no hydrogen was evolved any longer. Thus there was obtained the solid product (a).

(2) Preparation of the solid catalyst component (A)

In a 500-ml three-mouth glass flask were placed 15 g of the above-mentioned solid product (a), 200 ml of *n*-hexane, 3.7 ml of silicon tetrachloride, and 57 ml of isopropyl alcohol. After heating with stirring at 70°C for 2 hours, 32 ml of titanium tetrachloride was added and the reactants were heated with stirring under refluxing for 6 hours. The resulting solid product was thoroughly washed with *n*-hexane at normal temperature. Thus there was obtained the solid catalyst component (A).

(3) Polymerization

In a 1-liter stainless steal autoclave were placed 400 ml of purified *n*-hexane, 1.5 mmol of diethylaluminum chloride, and 0.01 mmol of the solid catalyst component (A) in terms of titanium atom. Polymerization of ethylene was carried out at 80°C for 1 hour under a hydrogen pressure of 1.5 $kg/cm^2$ and an ethylene pressure of 1.5 $kg/cm^2$.

Table 3 shows the iodine content in the solid product (a), the amount of titanium supported in the solid catalyst component (A), the yield of polymer, the catalyst activity, the particle size distribution of polymer, the alcohol-to-magnesium molar ratio employed in the preparation of the solid product (a), and the iodine-to-magnesium mol%.

**Comparative Example 1**

The procedure (1) in Example 1 was repeated except that iodine was not used. The resulting solid product was ground for 24 hours in a 1-liter stainless steel ball mill. The procedures (2) and (3) in Example 1 were repeated to prepare the solid catalyst component from the solid product and to carry out polymerization. The results are shown in Table 2.

**Comparative Example 2**

The procedure (1) in Example 1 was repeated to prepare a solid product from about 2430 g of ethanol, 0.042 g of iodine, and 160 g of metallic magnesium. The procedures (2) and (3) in Example 1 were repeated to prepare the solid catalyst component from the solid product and to carry out polymerization. The results are shown in Table 2.

**Comparative Example 3**

The same procedure as in Comparative Example 1 was repeated, except that the solid product was not ground but used as such to prepare the solid catalyst component. The results are shown in Table 2.

**Comparative Example 4**

The procedure (1) in Example 10 was repeated except that iodine was not used. The procedures (2) and (3) in Example 10 were repeated to prepare the solid catalyst component and to carry out polymerization. The results are shown in Table 3.

**Comparative Example 5**

The procedure (1) in Example 10 was repeated to prepare a solid product from about 2430 g of ethanol, 0.042 g of iodine, and 160 g of metallic magnesium. The procedures (2) and (3) in Example 10 were repeated to prepare the solid catalyst component from the solid product and to carry out polymerization. The results are shown in Table 3.

Table 1

| Example No. | 1 | 2 | 3 | 4 | 5 | 6 |
|---|---|---|---|---|---|---|
| Iodine/metallic Mg (g-atom/mol) | 0.019 | 0.0019 | 0.038 | 0.019 | 0.019 | 0.038 |
| Average particle diameter (μm) of solid product (a) | 62 | 41 | 80 | 62 | 62 | 80 |
| Sphericity of solid product (a) | 1.21 | 1.32 | 1.19 | 1.21 | 1.21 | 1.19 |

Table 1 (continued)

| Example No. | 1 | 2 | 3 | 4 | 5 | 6 |
|---|---|---|---|---|---|---|
| Particle size distribution index of solid product (a) | 1.7 | 2.8 | 2.0 | 1.7 | 1.7 | 2.0 |
| Supported amount of Ti in solid catalyst component (A) (mg-Ti/g-catalyst) | 27 | 25 | 32 | 29 | 27 | 41 |
| Results of polymerization | | | | | | |
| Yield of polymer (g) | 161.3 | 147.5 | 167.7 | 157.8 | 172.8 | 167.7 |
| Catalyst activity (kg-PP/g-Ti-2 hr) | 673.5 | 615.9 | 700.2 | 658.9 | 721.5 | 700.2 |
| Stereoregularity (I.I) (%) | 98.8 | 98.5 | 99.1 | 98.6 | 98.1 | 98.0 |
| Bulk density of powder (g/cc) | 0.45 | 0.42 | 0.43 | 0.40 | 0.46 | 0.42 |
| Properties of powder | | | | | | |
| Powder particles smaller than 250 µm (%) | 3.5 | 4.3 | 3.2 | 2.6 | 1.9 | 3.9 |
| Powder particles larger than 2830 µm (%) | 0.3 | 1.8 | 0.4 | 0.8 | 0.5 | 0.5 |
| Shape of powder particles | sphere | sphere | sphere | sphere | sphere | sphere |
| Sphericity of powder particles | 1.25 | 1.30 | 1.21 | 1.27 | 1.23 | 1.27 |
| Particle size distribution index of powder | 1.9 | 2.7 | 2.3 | 1.8 | 2.2 | 2.7 |

Table 2

| Example No. | 7 | 8 | 9 | (1) | (2) | (3) |
|---|---|---|---|---|---|---|
| Iodine/metallic Mg (g-atom/mol) | 0.019 | 0.0019 | 0.038 | 0 | 0.00005 | 0 |
| Average particle diameter (µm) of solid product (a) | 59 | 41 | 84 | 560 | 62 | 560 |
| Sphericity of solid product (a) | 1.20 | 1.35 | 1.17 | 1.87 | 1.69 | 1.87 |
| Particle size distribution index of solid product (a) | 1.7 | 2.7 | 1.9 | 7.6 | 6.4 | 7.6 |
| Supported amount of Ti in solid catalyst component (A) (mg-Ti/g-catalyst) | 30 | 23 | 28 | 18 | 20 | 15 |
| Results of polymerization | | | | | | |
| Yield of polymer (g) | 170.4 | 154.2 | 158.0 | 132.4 | 96.7 | 35.9 |
| Catalyst activity (kg-PP/g-Ti-2 hr) | 711.5 | 643.8 | 659.7 | 552.8 | 403.7 | 149.9 |
| Stereoregularity (I.I) (%) | 98.6 | 98.1 | 98.8 | 97.2 | 97.2 | 94.7 |
| Bulk density of powder (g/cc) | 0.44 | 0.42 | 0.45 | 0.33 | 0.40 | 0.25 |
| Properties of powder | | | | | | |
| Powder particles smaller than 250 µm (%) | 3.2 | 4.1 | 3.0 | 11.6 | 10.3 | 7.8 |
| Powder particles larger than 2830 µm (%) | 0.5 | 1.9 | 0.4 | 2.2 | 3.5 | 15.8 |
| Shape of powder particles | sphere | sphere | sphere | irregular | irregular | irregular |
| Sphericity of powder particles | 1.28 | 1.33 | 1.25 | 1.76 | 1.75 | 1.84 |
| Particle size distribution index of powder | 2.1 | 2.6 | 2.1 | 6.7 | 6.9 | 14.1 |
| Comparative Examples are indicated by parenthesized numbers. | | | | | | |

Table 3

| Example No. | 10 | (4) | (5) |
|---|---|---|---|
| Iodine/metallic Mg (g-atom/mol) | 0.019 | 0 | 0.00005 |
| Average particle diameter (μm) of solid product (a) | 62 | 560 | 62 |
| Sphericity of solid product (a) | 1.21 | 1.87 | 1.69 |
| Particle size distribution index of solid product (a) | 1.7 | 7.6 | 6.4 |
| Supported amount of Ti in solid catalyst component (A) (mg-Ti/g-catalyst) | 73.6 | 61.7 | 65.8 |
| Results of polymerization | | | |
| Yield of polymer (g) | 75.3 | 42.1 | 17.3 |
| Catalyst activity (kg-PE/g-Ti-hr-atm)) | 104.8 | 58.6 | 24.1 |
| Properties of powder | | | |
| Powder particles smaller than 250 μm (%) | 3.5 | 10.3 | 8.3 |
| Powder particles larger than 2830 μm (%) | 1.7 | 5.1 | 10.5 |
| Shape of powder particles | sphere | irregular | irregular |
| Sphericity of powder particles | 1.32 | 1.88 | 1.80 |
| Particle size distribution index of powder | 2.9 | 9.2 | 8.3 |
| Comparative Examples are indicated by parenthesized numbers. | | | |

**Example 11**

(1) Preparation of the solid catalyst component (A)

In a three-mouth glass flask, in which the air had been thoroughly replaced by nitrogen, were placed 30 ml of purified heptane, 30 mmol of the solid product (a) obtained in Example 1, 1.65 mmol of titanium tetrachloride, and 3.0 mmol of phthalic acid chloride (phthaloyl dichloride). After reaction at 98°C for 1 hour, additional 100 ml of titanium tetrachloride was added. Reaction was carried out with stirring at 110°C for 2 hours. The resulting solids were washed twice with 100 ml of hot heptane. Additional 100 ml of titanium tetrachloride was added, and reaction was continued at 110°C for 2 hours. The resulting solids were washed thoroughly with purified heptane. Thus there was obtained the desired solid catalyst component (A).

(2) Polymerization of propylene

In a 1-liter stainless steal autoclave were placed 400 ml of purified heptane, 2.0 mmol of $Al(C_2H_5)_3$, 0.25 mmol of norbornyltrimethoxysilane, and 0.005 mmol of the solid catalyst component (A) in terms of titanium atom. The autoclave was charged with hydrogen until the absolute pressure reached 0.2 kg/cm$^2$ and then with propylene until the absolute pressure reached 8 kg/cm$^2$. Polymerization was carried out at 70°C for 2 hours. The results are shown in Table 4.

**Examples 12 and 13**

The same procedure as in Example 11 was repeated except that the polymerization time was changed as shown in Table 4. The results are shown in Table 4.

**Examples 14 to 17**

The same procedure as in Example 11 was repeated except that the amount of phthalic acid chloride was changed as shown in Table 4. The results are shown in Table 4.

**Examples 18 and 19**

The same procedure as in Example 11 was repeated except that the amount of the solid product (a) was changed

as shown in Table 4. The results are shown in Table 4.

**Comparative Example 6**

The same procedure as in Example 11 was repeated except that the phthalic acid chloride was not used. The results are shown in Table 4.

**Comparative Example 7**

The same procedure as in Example 11 was repeated except that the solid product (a) was replaced by $MgCl_2$. The results are shown in Table 4.

Table 4

| Example No. | Solid product [component (a)] (mmol) | Acid halide [component (c)] (mmol) | (c)/(a) (mol ratio) | Titanium halide compound [component (b)] (mmol) | (b)/(a) (mol ratio) | Organoaluminum/solid catalyst component (mol ratio) | Organosilicon compound/solid catalyst component (mol ratio) | Polymerization time (min) | Yield of polymer (kg/g-Ti) | I.I. (%) | Powder sphericity (S) | Powder particle size distribution index (P) |
|---|---|---|---|---|---|---|---|---|---|---|---|---|
| 11 | 30 | 3.0 | 0.10 | 1.80 | 60.0 | 400 | 50 | 120 | 524 | 98 | 1.23 | 2.4 |
| 12 | 30 | 3.0 | 0.10 | 1.80 | 60.0 | 400 | 50 | 30 | 221 | 98 | 1.22 | 2.3 |
| 13 | 30 | 3.0 | 0.10 | 1.80 | 60.0 | 400 | 50 | 60 | 365 | 98 | 1.24 | 2.3 |
| 14 | 30 | 3.75 | 0.125 | 1.80 | 60.0 | 400 | 50 | 120 | 347 | 98 | 1.22 | 2.4 |
| 15 | 30 | 3.30 | 0.110 | 1.80 | 60.0 | 400 | 50 | 120 | 458 | 97 | 1.23 | 2.2 |
| 16 | 30 | 2.80 | 0.093 | 1.80 | 60.0 | 400 | 50 | 120 | 590 | 97 | 1.24 | 2.4 |
| 17 | 30 | 2.50 | 0.083 | 1.80 | 60.0 | 400 | 50 | 120 | 550 | 97 | 1.22 | 2.3 |
| 18 | 35 | 3.0 | 0.086 | 1.80 | 51.4 | 400 | 50 | 120 | 563 | 97 | 1.22 | 2.5 |
| 19 | 25 | 3.0 | 0.120 | 1.80 | 72.0 | 400 | 50 | 120 | 441 | 98 | 1.23 | 2.4 |
| (6) | 30 | – | – | 1.80 | 60.0 | 400 | 50 | 120 | 73 | 64 | – | – |
| (7) | 30 | 3.0 | 0.10 | 1.80 | 60.0 | 400 | 50 | 120 | 171 | 67 | – | – |

Comparative Examples are indicated by parenthesized numbers.

**Example 20**

(1) Preparation of the solid product (a)

The same procedure as in Example 1 was repeated.

(2) Preparation of the solid catalyst component (A)

In a 500-ml three-mouth glass flask, in which the air had been thoroughly replaced by nitrogen, were placed 16 g of the solid product (a) (not ground) obtained by procedure (1) above, 80 ml of purified heptane, 2.4 ml of silicon tetrachloride, and 2.5 ml of diethyl phthalate. With the reaction system kept at 90°C, 77 ml of titanium tetrachloride was added with stirring. After reaction at 110°C for 2 hours, the resulting solids were separated and washed with purified heptane at 80°C. Additional 77 ml of titanium tetrachloride was added. Reaction was carried out at 110°C for 2 hours. The resulting solids were washed thoroughly with purified heptane. Thus there was obtained the solid catalyst component (A).

(3) Polymerization of propylene

In a 1-liter stainless steal autoclave were placed 400 ml of purified heptane, 2.0 mmol of triethylaluminum, 0.05 mmol of diphenyldimethoxysilane, 0.2 mmol of dicyclohexyl phthalate, and 0.005 mmol (in terms of titanium atom) of the solid catalyst component (A) obtained by the procedure (2) above. The autoclave was charged with hydrogen and propylene until the hydrogen pressure reached 1.5 $kg/cm^2G$ and the propylene pressure reached 0.2 $kg/cm^2G$. Polymerization was carried out at 70°C for 2 hours at a total pressure of 8 $kg/cm^2$. The results are shown in Table 4.

**Example 21**

Example 20 was repeated except that the procedure (2) for the preparation of the solid catalyst component (A) was carried out using butyl benzoate (3.5 ml) in place of diethyl phthalate. The results are shown in Table 5.

**Example 22**

Example 20 was repeated except that the procedure (2) for the preparation of the solid catalyst component (A) was carried out using di-*n*-butyl phthalate (2.5 ml) in place of diethyl phthalate. The results are shown in Table 5.

**Example 23**

Example 20 was repeated except that the procedure (3) was carried out using di-*n*-butyl phthalate (0.2 mmol) in place of dicyclohexyl phthalate. The results are shown in Table 5.

**Example 24**

Example 20 was repeated except that the procedure (3) was carried out using di-*n*-butyldimethoxysilane (0.05 mmol) in place of diphenyldimethoxysilane. The results are shown in Table 5.

**Example 25**

Example 20 was repeated except that the procedure (1) for the preparation of the solid product (a) was carried out by adding additional 16 g of iodine. The results are shown in Table 5.

**Comparative Example 8**

Example 20 was repeated except that the procedure (3) was carried out in the absence of dicyclohexyl phthalate, with the amount of diphenyldimethoxysilane changed to 0.25 mmol. The results are shown in Table 5.

**Comparative Example 9**

Example 20 was repeated except that the procedure (3) was carried out in the absence of diphenylmethoxysilane, with the amount of dicyclohexyl phthalate changed to 0.25 mmol. The results are shown in Table 5.

Table 5

| Example No. | 20 | 21 | 22 | 23 | 24 | 25 | (8) | (9) |
|---|---|---|---|---|---|---|---|---|
| Supported amount of titanium (mg-Ti/g-catalyst) | 30 | 30 | 30 | 30 | 30 | 32 | 30 | 30 |
| Catalyst activity (kg-PP/g-Ti-2 hr) | 525 | 510 | 530 | 520 | 650 | 720 | 350 | 180 |
| Properties of polymer | | | | | | | | |
| mm fraction | 99.1 | 98.7 | 98.8 | 98.9 | 99.1 | 99.1 | 98.5 | 93.5 |
| Bulk density (g/cc) | 0.39 | 0.38 | 0.38 | 0.40 | 0.39 | 0.41 | 0.38 | 0.34 |
| Sphericity (S) | 1.31 | 1.30 | 1.23 | 1.32 | 1.25 | 1.22 | 1.32 | 1.32 |
| Particle size distribution index (P) | 2.2 | 2.1 | 2.1 | 1.9 | 2.3 | 2.1 | 2.0 | 2.2 |
| Comparative Examples are indicated by parenthesized numbers. | | | | | | | | |

POSSIBILITY OF EXPLOITATION IN INDUSTRY

The solid product (a) obtained from metallic magnesium, halogen, and alcohol can be incorporated into a catalyst without the need of grinding and other treatment for particle size adjustment. The resulting catalyst is highly active and gives rise to polyolefins having a high stereoregularity and good powder morphology.

**Claims**

**1.** A solid catalyst composition obtained from a solid product (a) as a catalyst carrier and a titanium compound (b) as a catalyst, said solid product (a) being obtained by the reaction of metallic magnesium, an alcohol, and a halogen in an amount of more than 0.0001 gram-atom and less than 0.06 gram-atom halogen for 1 mol of the metallic magnesium or by the reaction of a magnesium compound represented by R Mg R' (where R and R' are the same or different alkyl groups) and an alcohol; wherein the solid product (a) has a sphericity (S) smaller than 1.60 as defined by the formula (1) below and a particle size distribution index (P) smaller than 5.0 as defined by the formula (2) below

$$S = (E_1/E_2)^2 \qquad (1)$$

(where $E_1$ denotes the projected perimeter of a particle, and $E_2$ denotes the perimeter of the circle of equal. projected area of a particle)

$$P = D_{90}/D_{10} \qquad (2)$$

(where $D_{90}$ denotes the particle diameter corresponding to a cumulative weight fraction of 90 %, and $D_{10}$ denotes the particle diameter corresponding to a cumulative weight fraction of 10 %).

**2.** A solid catalyst composition obtained from a solid product (a) as a catalyst carrier, a titanium compound (b) as a catalyst, and an electron donor compound (c), said solid product (a) being obtained by the reaction of metallic magnesium, an alcohol, and a halogen in an amount of more than 0.0001 gram-atom and less than 0.06 gram-atom halogen for 1 mol of the metallic magnesium or by the reaction of a magnesium compound represented by R Mg R' (where R and R' are the same or different alkyl groups) and an alcohol; wherein the solid pruduct (a) has a sphericity (S) smaller than 1.60 as defined by the formula (1) below and a particle size distribution index (P) smaller than 5.0 as defined by the formula (2) below

$$S = (E_1/E_2)^2 \qquad (1)$$

(where $E_1$ denotes the projected perimeter of a particle, and $E_2$ denotes the perimeter of the circle of equal projected area of a particle)

$$P = D_{90}/D_{10} \quad (2)$$

(where $D_{90}$ denotes the particle diameter corresponding to a cumulative weight fraction of 90 %, and $D_{10}$ denotes the particle diameter corresponding to a cumulative weight fraction of 10 %).

**3.** A solid catalyst composition as claimed in claim 1 or 2, wherein the halogen is iodine.

**4.** A solid catalyst composition as claimed in any of claims 1 to 3, which has a pore volume greater than 0.4 cc/g and a specific surface area greater than 300 $m^2/g$.

**5.** A process for producing polyolefins which comprises using:

(A) a solid catalyst composition as defined in any of claims 1 and 3 or 4 and

(B) an organometallic compound.

**6.** A process for producing polyolefins which comprises using:

(A) a solid catalyst composition as defined in any of claims 2 to 4;

(B) an organometallic compound; and

(C) an electron donor compound.

**7.** A process for producing polyolefins which comprises using:

(A) a solid catalyst composition as defined in any of claims 2 to 4;

(B) an organometallic compound;

(C) at least one member selected from mono- or diesters of aromatic carboxylic acids; and

(D) a compound having the Si-O-C linkage.

**8.** A process for producing polyolefins which comprises using:

(A) a solid catalyst composition as defined in any of claims 2 to 5;

(B) an organometallic compound;

(C) at least one member selected from mono- or diesters of aromatic carboxylic acids; and

(D) an organosilicon compound represented by the formula below

$$R_1R^2{}_{3-n}Si(OR^3)_n$$

(where $R^1$, $R^2$, and $R^3$ denote the same or different hydrocarbon residues, and n is an integer of 2 or 3).

**9.** A process for producing polyolefins as claimed in any of claims 7 or 8, wherein the solid catalyst component (A) contains as the component (c) at least one member selected from mono- or diesters or aromatic dicarboxylic acids.

**10.** A process for producing polyolefins which comprises using:

(A) a solid catalyst composition as defined in any of claims 2 to 4, wherein the electron donor component (c) is an acid halide ;

(B) an organometallic compound; and

(C) an organosilicon compound containing alkoxyl groups.

**Patentansprüche**

1. Feste Katalysatorzusammensetzung, erhalten aus einem festen Produkt (a) als einem Katalysatorträger und einer Titanverbindung (b) als einem Katalysator, wobei das feste Produkt (a) aus der Reaktion von metallischem Magnesium, einem Alkohol und einem Halogen in einer Menge von mehr als 0,0001 Grammatom und weniger als 0,06 Grammatom Halogen auf ein Mol des metallischen Magnesium oder durch die Reaktion einer Magnesiumverbindung, welche durch die Formel R Mg R' repräsentiert wird (worin R und R' gleiche oder verschiedene Alkylgruppen sind), und einem Alkohol erhalten wird; worin das feste Produkt (a) eine Sphärizität (S) von weniger als 1,6 gemäß der Definition der untenstehenden Formel (1) und einen Partikelgrößenverteilungsindex (P) aufweist, der kleiner ist als 5,0 gemäß der untenstehenden Formel (2)

$$S = (E_1 / E_2)^2 \quad (1)$$

(worin $E_1$ den projizierten Perimeter eines Partikels und $E_2$ den Perimeter eines Kreises, der der Projektionsfläche eines Partikels entspricht, bedeutet)

$$P = D_{90} / D_{10} \quad (2)$$

(worin $D_{90}$ dem Partikeldurchmesser entsprechend der kumulierten Gewichtsfraktion von 90 % und $D_{10}$ dem Partikeldurchmesser einer kumulierten Gewichtsfraktion von 10 % entspricht).

2. Feste Katalysatorzusammensetzung, erhalten aus einem festen Produkt (a) als einem Katalysatorträger, einer Titanverbindung (b) als einem Katalysator und einer Elektronendonorverbindung (c), wobei das feste Produkt (a) durch die Reaktion von metallischem Magnesium, einem Alkohol und einem Halogen in einer Menge von mehr als 0,0001 Grammatom und weniger als 0,06 Grammatom Halogen auf ein Mol des metallischen Magnesiums oder durch die Reaktion einer Magnesiumverbindung, welche durch die Formel R Mg R' repräsentiert wird (worin R und R' die gleichen oder verschiedene Alkylgruppen repräsentieren), und einem Alkohol erhalten wird; worin das feste Produkt (a) eine Sphärizität (S) gemäß der unten folgenden Formel (1), welche kleiner ist als 1,6, und einen Partikelgrößenverteilungsindex (P) aufweist, welcher kleiner als 5,0 ist, gemäß der unten folgenden Formel (2)

$$S = (E_1 / E_2)^2 \quad (1)$$

(worin $E_1$ den projizierten Perimeter eines Partikels und $E_2$ den Perimeter eines Kreises, der der Projektionsfläche eines Partikels entspricht, bedeutet)

$$P = D_{90} / D_{10} \quad (2)$$

(worin $D_{90}$ dem Partikeldurchmesser entsprechend der kumulierten Gewichtsfraktion von 90 % und $D_{10}$ dem Partikeldurchmesser einer kumulierten Gewichtsfraktion von 10 % entspricht).

3. Feste Katalysatorzusammensetzung gemäß Anspruch 1 oder 2, worin das Halogen Jod ist.

4. Feste Katalysatorzusammensetzung nach einem der Ansprüche 1 bis 3, welche ein Porenvolumen größer als 0,4 $cm^3/g$ und eine spezifische Oberfläche größer als 300 $m^2/g$ aufweist.

5. Verfahren zur Herstellung von Polyolefinen, welches die Verwendung umfaßt von:

(A) einer festen Katalysatorzusammensetzung gemäß einem der Ansprüche 1 und 3 oder 4; und

(B) einer organometallischen Verbindung.

**6.** Verfahren zur Herstellung von Polyolefinen, welches die Verwendung umfaßt von:

(A) einer festen Katalysatorzusammensetzung gemäß einem der Ansprüche 2 bis 4;

(B) einer organometallischen Verbindung; und

(C) einer Elektronendonorverbindung.

**7.** Verfahren zur Herstellung von Polyolefinen, welches die Verwendung umfaßt von:

(A) einer festen Katalysatorzusammensetzung gemäß einem der Ansprüche 2 bis 4;

(B) einer organometallischen Verbindung;

(C) mindestens einem Mitglied ausgewählt aus Mono- oder Diestern von aromatischen Carbonsäuren; und

(D) einer Verbindung mit einer Si-O-C-Bindung.

**8.** Verfahren zur Herstellung von Polyolefinen, welches die Verwendung umfaßt von:

(A) einer festen Katalysatorzusammensetzung gemäß einem der Ansprüche 2 bis 5;

(B) einer organometallischen Verbindung;

(C) mindestens einem Mitglied ausgewählt aus Mono- oder Diestern von aromatischen Carbonsäuren; und

(D) einer Organosiliciumverbindung, repräsentiert durch die folgende Formel

$$R^1R^2_{3-n}Si(OR^3)_n$$

(worin $R^1$, $R^2$ und $R^3$ dieselben oder verschiedene Kohlenwasserstoffreste bezeichnen und worin n eine ganze Zahl von 2 oder 3 ist).

**9.** Verfahren zur Herstellung von Polyolefinen gemäß einem der Ansprüche 7 oder 8, worin die feste Katalysatorkomponente (A) als Komponente (c) mindestens ein Mitglied umfaßt, ausgewählt aus Mono- oder Diester von aromatischen Dicarbonsäuren.

**10.** Verfahren zur Herstellung von Polyolefinen, welches die Verwendung umfaßt von:

(A) einer festen Katalysatorzusammensetzung gemäß einem der Ansprüche 2 bis 4, worin die Elektronendonorkomponente (c) ein Säurehalogenid ist;

(B) einer Organometallverbindung; und

(C) einer Organosiliciumverbindung, welche Alkoxylgruppen enthält.

**Revendications**

**1.** Composition de catalyseur solide obtenue à partir d'un produit solide (a) comme support de catalyseur et d'un composé de titane (b) comme catalyseur, ledit produit solide (a) étant obtenu par la réaction de magnésium métallique, d'un alcool et d'un halogène en une quantité de plus de 0,0001 atome-gramme et de moins de 0,06 atome-gramme d'halogène pour 1 mole de magnésium métallique ou par la réaction d'un composé de magnésium représenté par RMgR' (dans lequel R et R' sont des groupes alkyle identiques ou différents) et d'un alcool, dans laquelle le produit solide (a) a une sphéricité (S) plus petite que 1,60 telle que définie par la formule (1) ci-après et un indice de distribution de tailles de particules (P) plus petit que 5,0 tel que défini par la formule (2) ci-après :

$$S = (E_1/E_2)^2 \qquad (1)$$

(où $E_1$ représente le périmètre projeté d'une particule et $E_2$ représente le périmètre du cercle d'aire projetée égale d'une particule)

$$P = D_{90}/D_{10} \qquad (2)$$

(où $D_{90}$ représente le diamètre de particule correspondant à une fraction pondérale cumulative de 90 % et $D_{10}$ représente le diamètre de particule correspondant à une fraction pondérale cumulative de 10 %).

**2.** Composition de catalyseur solide obtenue à partir d'un produit solide (a) comme support du catalyseur, d'un composé de titane (b) comme catalyseur et d'un composé donneur d'électrons (c), ledit produit solide (a) étant obtenu par la réaction de magnésium métallique, d'un alcool et d'un halogène en une quantité de plus de 0,0001 atome-gramme et de moins de 0,06 atome-gramme d'halogène pour 1 mole de magnésium métallique ou par la réaction d'un composé de magnésium représenté par RMgR' (dans lequel R et R' sont des groupes alkyle identiques ou différents) et d'un alcool, dans laquelle le produit solide (a) a une sphéricité (S) plus petite que 1,60 telle que définie par la formule (1) ci-après et un indice de distribution de tailles de particules (P) plus petit que 5,0 tel que défini par la formule (2) ci-après :

$$S\text{-}(E_1/E_2)^2 \qquad (1)$$

(où $E_1$ représente le périmètre projeté d'une particule et $E_2$ représente le périmètre du cercle d'aire projetée égale d'une particule)

$$P = D_{90}/D_{10} \qquad (2)$$

(où $D_{90}$ représente le diamètre de particule correspondant à une fraction pondérale cumulative de 90 % et $D_{10}$ représente le diamètre de particule correspondant à une fraction pondérale cumulative de 10 %).

**3.** Composition de catalyseur solide suivant l'une ou l'autre des revendications 1 et 2, dans laquelle l'halogène est de l'iode.

**4.** Composition de catalyseur solide suivant l'une quelconque des revendications 1 à 3, qui a un volume des pores supérieur à 0,4 cc/g et une aire superficielle spécifique supérieure à 300 $m^2$/g.

**5.** Procédé de production de polyoléfines, qui comprend l'utilisation :

(A) d'une composition de catalyseur solide suivant l'une quelconque des revendications 1 et 3 ou 4, et
(B) d'un composé organométallique.

**6.** Procédé de production de polyoléfines, qui comprend l'utilisation :

(A) d'une composition de catalyseur solide suivant l'une quelconque des revendications 2 à 4;
(B) d'un composé organométallique; et
(C) d'un composé donneur d'électrons.

**7.** Procédé de production de polyoléfines, qui comprend l'utilisation :

(A) d'une composition de catalyseur solide suivant l'une quelconque des revendications 2 à 4;

(B) d'un composé organométallique;
(C) d'au moins un membre choisi parmi les mono- et diesters d'acides carboxyliques aromatiques; et
(D) d'un composé comportant la liaison Si-O-C.

**8.** Procédé de production de polyoléfines, qui comprend l'utilisation :

(A) d'une composition de catalyseur solide suivant l'une quelconque des revendications 2 à 5;
(B) d'un composé organométallique;
(C) d'au moins un membre choisi parmi les mono- et diesters d'acides carboxyliques aromatiques; et
(D) d'un composé organosilicique représenté par la formule ci-après :

$$R^1R^2{}_{3-n}Si(OR^3)_n$$

(dans laquelle $R^1$, $R^2$ et $R^3$ désignent des résidus hydrocarbonés identiques ou différents et n est un nombre entier de 2 ou 3.

**9.** Procédé de production de polyoléfines suivant l'une ou l'autre des revendications 7 et 8, dans lequel le composant de catalyseur solide (A) contient comme composant (c) au moins un membre choisi parmi les mono- et diesters d'acides dicarboxyliques aromatiques.

**10.** Procédé de production de polyoléfines, qui comprend l'utilisation :

(A) d'une composition de catalyseur solide suivant l'une quelconque des revendications 2 à 4, dans laquelle le composant donneur d'électrons (c) est un halogénure d'acide;
(B) d'un composé organométallique; et
(C) d'un composé organosilicique contenant des groupes alcoxyle.

Fig 1.

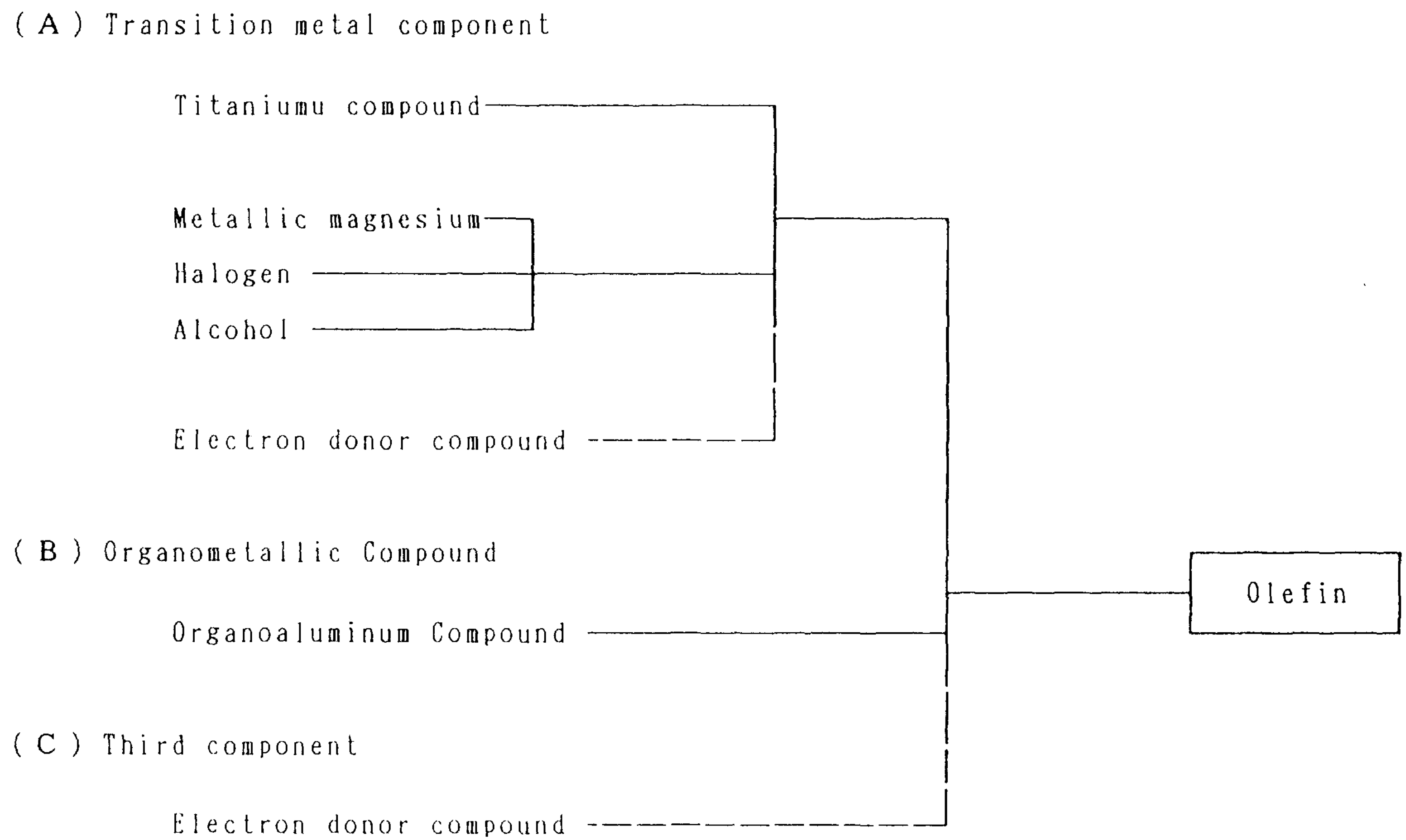
(A) Transition metal component
Titaniumu compound
Metallic magnesium
Halogen
Alcohol
Electron donor compound
(B) Organometallic Compound
Organoaluminum Compound
(C) Third component
Electron donor compound
Olefin